# EUROPÄISCHE PATENTSCHRIFT

(11) **EP 2 673 105 B1**
(45) Veröffentlichungstag und Bekanntmachung des Hinweises auf die Patenterteilung: **17.05.2017**
(21) Anmeldenummer: 12704040.0
(22) Anmeldetag: 09.02.2012
(51) Int. Cl.: B23K 9/28, B23K 9/29

(54) **GASGEKÜHLTE SCHWEISSPISTOLE FÜR EIN LICHTBOGENSCHWEISSGERÄT**
GAS COOLED WELDING TORCH FOR AN ARC WELDING DEVICE
TORCHE DE SOUDAGE REFROIDIE PAR GAS POUR UN APPAREIL DE SOUDAGE À L'ARC

(30) Priorität: 09.02.2011 DE 202011000295 U
(43) Veröffentlichungstag der Anmeldung: 18.12.2013
(73) Patentinhaber: Dinse G.m.b.H., 22419 Hamburg (DE); Mewes, Christopher, 24568 Kaltenkirchen (DE)
(72) Erfinder: ZANDER, Peter, 22844 Norderstedt (DE)
(74) Vertreter: Raffay & Fleck
(86) Internationale Anmeldenummer: PCT/EP2012/052162
(87) Internationale Veröffentlichungsnummer: WO 2012/107509

(56) Entgegenhaltungen:
- JP-A- 2010 284 666
- US-A- 3 253 116
- US-A- 3 436 522
- US-A- 3 659 076
- US-A1- 2006 226 132

## Beschreibung

### Technisches Gebiet

Die vorliegende Erfindung betrifft eine gasgekühlte Schweißpistole für ein Lichtbogenschweißgerät mit den Merkmalen des Oberbegriffes des Anspruchs 1 (siehe US-A-3 436 522).

### Stand der Technik

Schweißpistolen, auch Schweißbrenner genannt, sind diejenigen Elemente eines Lichtbogenschweißgerätes, in denen - umgeben von einer Schutzgashülle - am Schweißort der Lichtbogen gezündet und der Schweißdraht sowie das zu verschweißende Material an der Nahtstelle aufgeschmolzen und zum Ausbilden einer innigen Verbindung miteinander vermengt werden. Die thermische Energie zum Aufschmelzen des Materials wird bei der Lichtbogenschweißtechnik elektrisch mit hohen Strömen erreicht. Die hierfür erforderlichen Ströme werden der Schweißstelle über ein im Inneren der Schweißpistole geführtes Stromkontaktrohr zugeführt, welches typischerweise in seinem Inneren einen Drahtführungskanal aufweist, durch den der Schweißdraht der Schweißstelle zugeführt wird. Um das Stromkontaktrohr herum ist ein Mantelrohr geführt, in dem Bereich zwischen diesen Elementen wird das Schutzgas zur Schweißstelle transportiert, und es ist eine Kühlung zum Ableiten der beim Schweißen entstehenden thermischen Energie in diesem Raum eingerichtet. Das Schutzgas bewirkt ein Abschotten der Schweißstelle gegenüber der Umgebungsluft und verhindert insbesondere das Eindringen von Sauerstoff, wobei das Schutzgas als reines Inertgas (beim MIG-Schweißen) fungieren, aber auch einen Einfluss auf den Schweißvorgang haben

### kann (beim MAG-Schweißen).

Grundsätzlich werden hinsichtlich der Kühlung zwei unterschiedliche Vorgehensweisen unterschieden. So sind am Markt eine Vielzahl von Schweißpistolen für Lichtbogenschweißgeräte bekannt, die flüssigkeitsgekühlt sind, in der Regel mit einer Wasserkühlung. Ein anderes Konzept sieht eine reine Gaskühlung vor, wobei als Kühlgas typischerweise das Schutzgas Verwendung findet. Hierbei dient also das durch den Zwischenraum zwischen dem Stromkontaktrohr und dem Außenrohr strömende Schutzgas nicht allein einer Isolierung der Schweißstelle von der Umgebungsluft, es besorgt zudem eine Abfuhr thermischer Energie aus der Schweißpistole und verhindert ein Überhitzen derselben und eine darauf resultierende Beschädigung bzw. eine Verkürzung der Lebensdauer.

Bei einer solchen gasgekühlten Schweißpistole, der sich die Weiterbildung der Erfindung widmet, muss selbstverständlich dafür Sorge getragen werden, dass das Stromkontaktrohr nicht das Außenrohr, welches aus einem elektrisch leitenden Material besteht, berührt oder diesem derart nahekommt, dass es zu einem Funkenüberschlag kommt. Denn ansonsten würde der im Stromkontaktrohr geführte Schweißstrom auf das Außenrohr gelangen, es käme zu einem Kurzschluss und einer möglichen Gefährdung von Bedienpersonal. Problematisch hierbei ist insbesondere, dass sich aufgrund des Temperatureintrages in die Schweißpistole aufgrund unterschiedlicher thermischer Ausdehnungen Relativbewegungen zwischen dem Stromkontaktrohr und dem Außenrohr ergeben können, die - sofern eine ausreichende Isolierung zwischen diesen Elementen nicht gegeben ist - zu den genannten Problemen und Gefährdungen führen können.

Hier wird bei den heute bekannten und am Markt befindlichen Schweißpistolen dieser Kühltechnik typischerweise das in dem Außenrohr liegende Stromkontaktrohr insgesamt mit einer Isolierung überzogen, z.B. mit einer einige Zehntel bis hin zu einige Millimetern starken Kunststoffschrumpffolie, die eine sichere elektrische Isolierung gewährt.

Hinsichtlich der elektrischen Isolierung hat sich diese Konstruktion als zuverlässig erwiesen. Problematisch ist jedoch, dass die auf das Stromkontaktrohr aufgebrachte elektrische Isolierung zugleich auch eine Reduzierung der thermischen Leitfähigkeit bedingt, so dass der Wärmeübertrag vom Stromkontaktrohr in das oberhalb der elektrischen Isolierung strömende Schutzgas gegenüber einem Wärmeübertrag bei direktem Kontakt des Schutzgases mit dem elektrisch leitendem Material des Stromkontaktrohres geringer ist. Dies führt zu Schwierigkeiten bei einer zuverlässigen Ableitung der Wärme und generell verkürzter Lebensdauer entsprechender Schweißpistolen. Um dem entgegenzuwirken, werden häufig erhöhte Schutzgasströmungsmengen eingestellt, die wiederum zu einem an sich für den reinen Schweißvorgang nicht erforderlich hohen Verbrauch dieses Materials führen, im schlimmsten Falle zu den im optimalen Schweißfall einzustellenden Parametern im Widerspruch stehen.

### Darstellung der Erfindung

Hier setzt die Erfindung an, deren Aufgabe es ist, eine gasgekühlte Schweißpistole dahingehend weiterzubilden, dass eine verbesserte Kühlwirkung erreicht werden kann, bei gleichzeitig nach wie vor zuverlässiger Isolierung des Stromkontaktrohres gegenüber dem Außenrohr.

Diese Aufgabe löst die Erfindung mit einer gasgekühlten Schweißpistole gemäß den Merkmalen des Anspruchs 1. Vorteilhafte Weiterbildungen einer solchen sind in den abhängigen Ansprüchen 2 bis 4 angegeben.

Die erfindungsgemäße Entwicklung zeichnet sich dadurch aus, dass auf eine vollständige Isolierung des Stromkontaktrohres durch Aufbringen einer entsprechenden elektrisch isolierenden Schicht verzichtet wird und nur in Teilbereichen des Zwischenraumes Abstandhalter, die entsprechend ausreichend starr gebildet sind, zwischen Stromkontaktrohr und Außenrohr angeordnet sind, um die Einhaltung eines Abstandes zu gewährleisten. Diese Abstandhalter haben entsprechende Durchlassstrukturen zum Durchlassen des Schutzgases, um so den Schutzgasführungskanal, der zwischen dem Stromkontaktrohr und dem Außenrohr gebildet ist, nicht zu unterbrechen, sondern eine zuverlässige Durchleitung des Schutzgases und Zuleitung desselben zur Austrittsstelle im Schweißbereich zu gewährleisten. Durch diese Maßnahme wird zunächst erreicht, dass das zur Kühlung der Schweißpistole eingesetzte Schutzgas in unmittelbaren Kontakt mit dem elektrisch leitenden Material des Stromkontaktrohres gelangt und dabei eine gegenüber der Situation mit dazwischen liegender Isolierungsschicht deutlich verbesserte Wärmeaufnahme bewerkstelligen kann. Die zweite erfindungsgemäße und erfindungswesentliche Maßnahme besteht darin, dass das Stromkontaktrohr in solchen Bereichen, in denen die Abstandhalter nicht angeordnet sind und in denen es mit der Oberfläche des elektrisch leitenden Materials in den Zwischenraum exponiert liegt, Oberflächen vergrößernde Strukturen in Form von spiralförmig um das Stromkontaktrohr (6; 106) herum verlaufenden Kühlrippen aufweist. Diese Oberflächenvergrößerung, die bei der nach dem Stand der Technik bekannten Bauart eines vollständig isolierten Stromkontaktrohres nicht angewandt wurde, auch nicht möglich war, da das Aufbringen einer isolierenden Schrumpffolie über solche Strukturen nicht ohne erhebliche Risiken für einen Riss der Folie und damit eine Unterbrechung der Isolierung gelingen konnte, führt zu einem weiteren verbesserten Wärmeübergangseffekt, so dass die Wärme aus dem Stromkontaktrohr noch effizienter in das Schutzgas übertreten und von diesem abgeführt werden kann.

Durch die erfindungsgemäßen Maßnahmen kann also eine erheblich verbesserte Wärmeabfuhr aus der Schweißpistole erreicht werden, so dass bei gleich eingestelltem Gasvolumenstrom die Schweißpistole auf niedrigerer Temperatur gehalten werden kann bzw. zum Einstellen einer vorgegebenen Maximaltemperatur ein geringerer Gasstrom erforderlich ist. Dies unterstützt bei der Erhöhung der Lebensdauer einer solchen Schweißpistole und kann zudem zu einer Reduzierung des Verbrauches des Mediums Schutzgas beitragen.

Erfindungsgemäß liegt auch das Außenrohr in den Bereichen, in denen keine Abstandshalter angeordnet sind, mit der Oberfläche des elektrisch leitenden Materials in den Zwischenraum exponiert. Dies führt zu einem entsprechend verbesserten Effekt des Wärmeübertrags auch an dieser Grenzfläche und unterstützt den verbesserten Kühleffekt zusätzlich.

Die Abstandhalter haben sich als besonders stabil und zuverlässig erwiesen, wenn sie - wie in einer Weiterbildung der Erfindung vorgesehen - einen außen auf dem Stromkontaktrohr aufliegenden, dieses umschließenden ersten ringförmigen Abschnitt, einen an der Innenseite des Innenrohres anliegenden zweiten ringförmigen Abschnitt (der insbesondere auch durchgehend ausgebildet ist) und zwischen den ringförmigen Abschnitten diese unter Auslassung von Zwischenräumen speichenartig verbindende Verbindungsstege aufweist. Eine solche Gestaltung der Abstandhalter, die sich zudem über eine gewisse axiale Länge erstrecken können, erweist sich als besonders stabil auch unter Belastungen, wie sie aufgrund unterschiedlicher thermischer Ausdehnungen und damit Verformungen des Außenrohres relativ zu dem Stromkontaktrohr ergeben können. Derartige Abstandhalter müssen nur in vergleichsweise geringer Zahl in dem Zwischenraum zwischen Stromkontaktrohr und Außenrohr angeordnet werden, um den einzuhaltenden Abstand zuverlässig zu wahren, so dass weite Bereiche der genannten Elemente mit ihren elektrisch leitenden Oberflächen unmittelbar dem Zwischenraum zugewandt und gegenüber diesem exponiert angeordnet sein können, so dass der verbesserte Wärmeableitungseffekt besonders gut eintritt. Im Übrigen können somit auch weite Bereiche des Stromkontaktrohres mit entsprechenden Oberflächen vergrößernden Strukturen versehen werden, was zu einer guten Wärmeableitung beiträgt.

Die Abstandshalter bestehen bevorzugt insgesamt aus einem elektrisch isolierenden Material, welches insbesondere ein elektrisch isolierender Kunststoff, bevorzugt aber eine solche Keramik sein kann. Keramik hat dabei wiederum den Vorteil, dass diese sehr belastbar ist und hohen statischen, wie auch jedenfalls in den erforderlichen Maßen dynamischen Beanspruchungen ausgesetzt werden kann, ohne hierbei eine Zerstörung befürchten zu müssen. Damit aber kann der einzuhaltende Abstand zwischen Stromkontaktrohr und Außenrohr mit solchen Elementen zuverlässig aufrechterhalten werden.

Typischerweise bestehen sowohl das Stromkontaktrohr als auch das Außenrohr aus metallischen Materialien, das Stromkontaktrohr zumeist aus Kupfer, das Außenrohr häufig aus Edelstahl.

Die erfindungsgemäße Schweißpistole kann sowohl für den Einsatz an einem Schweißautomaten als auch für die handgehaltene Verwendung konzipiert sein.

### Kurze Beschreibung der Zeichnungen

Weitere Vorteile und Merkmale der Erfindung ergeben sich aus der nachstehenden Beschreibung von Ausführungsbeispielen anhand der beigefügten Figuren. Dabei zeigen:
Fig. 1 eine geschnittene Seitenansicht einer erfindungsgemäßen Schweißpistole mit gradlinigem Verlauf;
Fig. 2 eine der Fig. 1 vergleichbare Ansicht derselben Schweißpistole, jedoch nicht vollständig geschnitten, sondern nur teilweise weggeschnitten;
Fig. 3 eine Ansicht wie Fig. 2 von einer alternativen erfindungsgemäßen Schweißpistole mit gekrümmtem Rohrverlauf;
Fig. 4 eine schematische Aufsicht auf ein erstes Ausführungsbeispiel eines möglichen Abstandhalters und
Fig. 5 eine schematische Aufsicht auf ein zweites Ausführungsbeispiel eines möglichen Abstandhalters.

### Weg(e) zur Ausführung der Erfindung

In den Figuren sind Ausführungsbeispiele der Erfindung schematisch dargestellt. Sie sind weder in sämtlichen konstruktiven Details wiedergegeben, noch zwingend maßstabsgerecht, sondern sollen vielmehr als Prinzipdarstellungen verstanden werden, die die erfindungswesentlichen Merkmale erläutern.

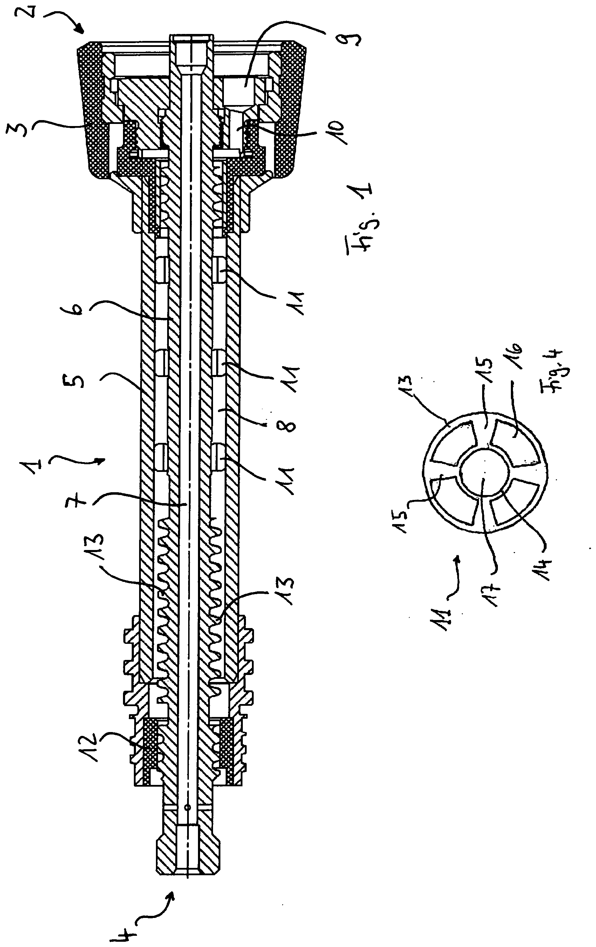

In Fig. 1 ist in einer geschnittenen Seitenansicht eine Schweißpistole mit wesentlichen Elementen dargestellt und allgemein als 1 bezeichnet. Die Schweißpistole 1 weist an einem rückwärtigen Anschlussende 2 eine Überwurfmutter 3 zum Verbinden mit einem entsprechenden Anschluss einer Medienzuführung, z.B. eines sogenannten Schlauchpaketes, auf. Dem Anschlussende 2 gegenüber liegt das Schweißende 4, welches ein vorderes Ende der Schweißpistole 1 darstellt.

Zwischen dem Anschlussende 3 und dem Schweißende 4 erstreckt sich die Schweißpistole der Fig. 1 gradlinig und ist in einem entsprechenden mittleren Abschnitt außen begrenzt durch ein Außenrohr 5. Im Wesentlichen im Zentrum des Außenrohres 5 und koaxial mit diesem verläuft ein Stromkontaktrohr 6. Dieses Stromkontaktrohr 6 weist in seinem Inneren einen Drahtführungskanal 7 auf, durch den im Betrieb Schweißdraht geführt und zum Schweißende 4 verbracht wird. Das Stromkontaktrohr 6 ist aus Metall, insbesondere aus Kupfer, geformt und dient neben der Zuführung des Schweißdrahtes durch den Drahtführungskanal 7 in seinem Inneren auch dem Heranbringen des Schweißstroms zum Schweißende 4. Mit Hilfe dieses Schweißstroms wird am Schweißende 4 der Lichtbogen gezündet zum Aufschmelzen des Schweißdrahtes wie auch des zu schweißenden Materials an der Schweißstelle.

Zwischen dem Außenrohr 5 und dem Stromkontaktrohr 6 ist ein Zwischenraum 8 gebildet, der zugleich einen Leitungskanal für zu dem Schweißende 4 zuzuführendes Schutzgas darstellt. Das Schutzgas wird im Anschlussende 2 von einer entsprechenden Medienzuführung in einen Schutzgasanschluss 9 übergeben und gelangt dort über die Bohrung 10 in den Zwischenraum 8.

In dem Zwischenraum 8 sind in etwa auf der Hälfte der Erstreckung des Außenrohres und an zwei äquidistanten Positionen hin zum Anschlussende 2 insgesamt drei Abstandshalter 11 angeordnet. Diese sind aus einem elektrisch isolierenden Material, insbesondere aus Keramik, gebildet und bestehen jeweils aus einem inneren Ring, der geschlossen um das Stromkontaktrohr 6 herumgelegt ist, zum Verhindern eines axialen Verrutschens entlang der Längsrichtung des Stromkontaktrohres 6 in Einschnürungen dieses Materials ruht, einem äußeren Ring, der ebenfalls durchgehend gebildet ist und sich an der inneren Wandung des Außenrohres 5 abstützt, sowie aus die beiden Ringe strahlenförmig und speichenartig verbindenden Streben. Zwischen diesen Streben sind Durchlässe gebildet, so dass der in dem Zwischenraum 8 gebildete Leitungskanal für das Schutzgas durch die Abstandshalter 11 hindurchführt. Ein weiterer Abstandshalter 12 ist nahe des Schweißendes 4 ausgebildet und ähnlich gestaltet.

In den Zwischenbereichen, in denen keine Abstandshalter angeordnet sind, ist die metallene Oberfläche des Stromkontaktrohres 6 freiliegend dem Zwischenraum 8 exponiert. Ebenso freiliegend und ohne Zwischenlage etwaiger isolierender Schichten ist in diesen Bereichen auch die Oberfläche der Innenwand des Außenrohres 5, welches aus Stahl gebildet ist, dem Zwischenraum 8 ausgesetzt.

In einem langgestreckten, zwischen dem zuvorderst, also dem Schweißende 4 am nächsten, liegenden Abstandshalter 11 und dem Abstandshalter 12 ist das Schutzkontaktrohr 6 mit Kühlrippen 13 zur Oberflächenvergrößerung konturiert ausgebildet. Diese Kühlrippen 13 verlaufen spiralförmig um das Stromkontaktrohr 6.

Die Kühlrippen 13 besorgen in dem Abschnitt, in dem sie angeordnet sind, eine Oberflächenvergrößerung des Stromkontaktrohres 6 und mithin einen intensiveren und ausgedehnteren Kontakt des an den Kühlrippen 13 vorbeiströmenden Schutzgases mit dem Stromkontaktrohr 6. Diese Maßnahme zusammen mit der Tatsache, dass in diesem Bereich das Stromkontaktrohr 6 ohne eine isolierende Auflage dem Zwischenraum 8 ausgesetzt ist und damit mit dem durch diesen Zwischenraum 8 strömenden Schutzgas unmittelbar in Berührung gelangt, verbessert die Kühlwirkung des Schutzgases in höchstem Maße.

Zu erwähnen ist hier noch, dass die Schweißpistole 1 ohne die für eine Vervollständigung derselben am Schweißende 4 anzubringenden Elemente eines Gasverteilers (dieser sitzt am Schweißende 4 auf dem Stromkontaktrohr 6 und verteilt das dort austretende Schutzgas über den Umfang) sowie einer Gasdüse gezeigt ist, die in diesem Abschnitt aufgeschraubt wird und das Stromkontaktrohr 6 am Schweißende 4 umgibt sowie eine Bündelung und Zuführung des Schutzgases besorgt und zugleich die Schweißstelle in einem gewissen Maße abschottet.

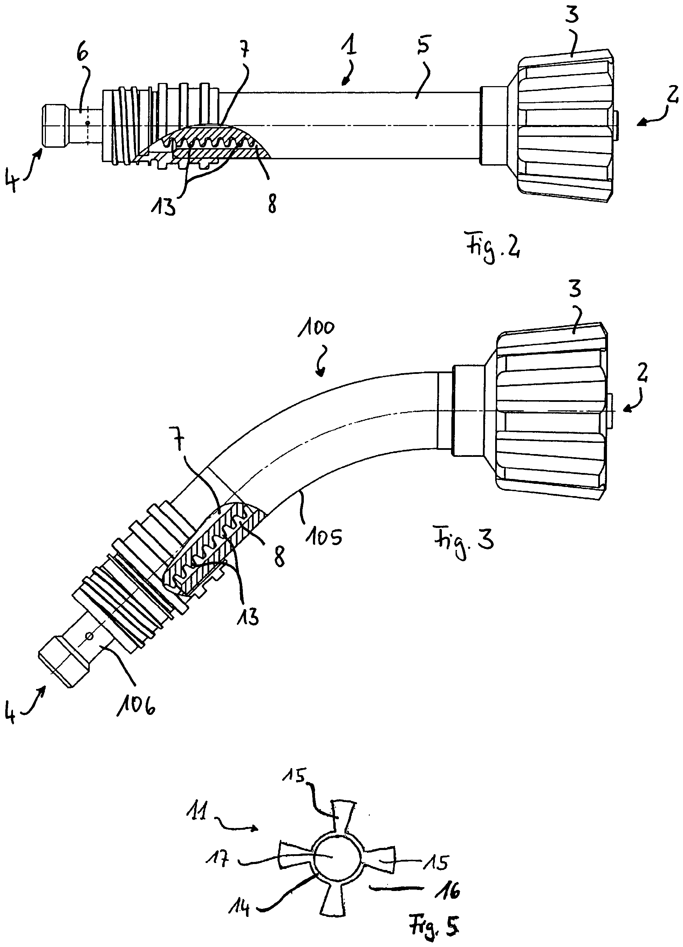

In Fig. 2 ist eine Schweißpistole 1 wie in Fig. 1 in geschnittener Seitenansicht noch einmal in einer nur teilweise weggeschnittenen gleichen Seitenansicht gezeigt.

Fig. 3 zeigt eine alternative Ausführungsform einer erfindungsgemäßen Schweißpistole, die hier mit 100 bezeichnet ist. Diese weist im Wesentlichen einen gleichen Aufbau auf, ist jedoch gekrümmt geformt und weist nicht, wie das zuvor gezeigte Ausführungsbeispiel, einen langgestreckten Verlauf auf. Entsprechend sind das Außenrohr 105 gekrümmt wie auch das Stromkontaktrohr 106. Ansonsten liegen aber auch hier entsprechende Abstandhalter 11 und 12 (nicht dargestellt) an den jeweiligen Positionen, sind Stromkontaktrohr 106 und Außenrohr 105 ohne in den Zwischenraum 8 gerichtete Isolierungen gebildet und weist das Stromkontaktrohr 106 Kühlrippen 13 zur Verbesserung des Kühleffektes auf.

In Fig. 4 ist eine schematische Aufsicht auf einen Abstandhalter 11 gemäß einer ersten Ausführungsform desselben gezeigt. Dort ist zu erkennen, dass dieser einen inneren Ring 14, der auf dem Stromkontaktrohr 6 aufliegt, einen äußeren Ring 13 zur Anlage an der Innenseite des Außenrohrs 5. Zwischen dem inneren Ring 14 und dem äußeren Ring 13 verlaufen speichenartige Streben 15, die zwischen sich Zwischenräume 16 belassen. Durch diese Zwischenräume 16 strömt im Betrieb das Gas entlang des Leitungskanals 8.

In Fig. 5 ist eine mögliche Abwandlung des Abstandhalters 11 gezeigt. Der dort gezeigte Abstandhalter 11 hat keinen äußeren Ring 13. Er stützt sich im eingebauten Zustand vielmehr direkt mit den Enden der speichenartigen Streben 15 an der Innenseite des Außenrohrs 5 ab. Zwischen den Streben 15 sind auch hier Zwischenräume 16 gebildet zur Gasdurchführung.

Aus der voranstehenden Beschreibung der Ausführungsbeispiele ist noch einmal deutlich geworden, in welcher Weise durch die Erfindung eine erhebliche Verbesserung der Kühleigenschaften einer gasgekühlten Schweißpistole 1 bzw. 100 erzielt wird.

### Bezugzeichenliste

- 1: Schweißpistole
- 2: Anschlussende
- 3: Überwurfmutter
- 4: Schweißende
- 5: Außenrohr
- 6: Stromkontaktrohr
- 7: Drahtführungskanal
- 8: Zwischenraum / Leitungskanal
- 9: Schutzgasanschluss
- 10: Bohrung
- 11: Abstandhalter
- 12: Abstandhalter
- 13: äußerer Ring
- 14: innerer Ring
- 15: speichenartiger Steg
- 16: Zwischenraum
- 100: Schweißpistole
- 105: Außenrohr
- 106: Stromkontaktrohr

## Patentansprüche

1. Gasgekühlte Schweißpistole (1; 100) für ein Lichtbogenschweißgerät mit einem aus einem elektrisch leitenden Material gebildeten Stromkontaktrohr (6; 106), in dessen Inneren ein Drahtführungskanal (7) für einen Schweißdraht ausgebildet ist, und einem das Stromkontaktrohr (6; 106) unter Belassung eines Zwischenraumes (8) umgebenden Außenrohr (5; 105), wobei der Zwischenraum (8) als Leitungskanal für ein Schutzgas durchgängig gebildet ist und wobei zwischen dem Stromkontaktrohr (6; 106) und dem Außenrohr (5; 105) diese Elemente gegeneinander elektrisch isolierende Abstandhalter (11, 12) angeordnet sind, die Durchlassstrukturen (16) zum Durchlassen des Schutzgases aufweisen, wobei die Abstandhalter (11, 12) nur in Teilbereichen des Zwischenraumes (8) angeordnet sind, wobei das Außenrohr aus einem elektrisch leitenden Material gebildet ist, dass das Stromkontaktrohr (6; 106) in den übrigen Bereichen, in denen keine Abstandhalter (11, 12) angeordnet sind, mit der Oberfläche des elektrisch leitenden Materials in den Zwischenraum (8) exponiert liegt, und auch das Außenrohr (5; 105) in den Bereichen, in denen keine Abstandhalter (11, 12) angeordnet sind, mit der Oberfläche des elektrisch leitenden Materials in den Zwischenraum (8) exponiert liegt, **dadurch gekennzeichnet dass** das Stromkontaktrohr (6; 106) jedenfalls in einem Teil der übrigen Bereiche, in denen das Stromkontaktrohr (6; 106) mit der Oberfläche des elektrisch leitenden Materials in den Zwischenraum (8) exponiert liegt, mit oberflächenvergrößernden Strukturen (13) in Form von spiralförmig um das Stromkontaktrohr (6, 106) herum verlaufenden Kühlrippen versehen ist.

2. Schweißpistole nach Anspruch 1, **dadurch gekennzeichnet, dass** die Abstandhalter (11, 12) jeweils einen außen auf dem Stromkontaktrohr (6; 106) aufliegenden, und dieses umschließenden ersten ringförmigen Abschnitt (14), einen an der Innenseite des Innenrohres anliegenden zweiten ringförmigen Abschnitt (13) und die beiden ringförmigen Abschnitte unter Auslassung von Zwischenräumen (16) speichenartig verbindende Verbindungsstege (15) aufweisen.

3. Schweißpistole nach einem der vorhergehenden Ansprüche, **dadurch gekennzeichnet, dass** die Abstandhalter (11, 12) insgesamt aus einem elektrisch isolierenden Material bestehen, insbesondere aus einem elektrisch isolierenden Kunststoff oder einer solchen Keramik.

4. Schweißpistole nach einem der vorhergehenden Ansprüche, **dadurch gekennzeichnet, dass** das Stromkontaktrohr (6; 106) und/oder das Außenrohr (5; 105) aus Metall gebildet sind.

## Claims

1. A gas-cooled welding torch (1; 100) for an arc welding machine comprising a current contact tube (6; 106) formed from an electrically conductive material, in the interior of which a wire guide channel (7) for a welding wire is formed, and a current contact tube (6; 106) is formed, by leaving an outer tube (5; 105) enclosing the intermediate space (8), whereas the intermediate space (8) is formed as a guiding conduit for a protective gas and whereas said spacers (11, 121) electrically insulating said elements are arranged between the current contact tube (6; 106) and the outer tube (5; 105), which exhibit passage structures (16) for letting the protective gas through, whereas the spacers (11, 12) are arranged only in partial areas of the intermediate space (8), whereas the outer tube is formed an electrically conducting material, in that the current contact tube (6; 106) is exposed in the remaining areas, in which no spacer (11, 12) is provided, with the surface of the electrically conducting material in the intermediate space (8),
in that the outer tube (5; 105) is exposed in the areas, in which no spacer (11, 12) is provided, with the surface of the electrically conducting material in the intermediate space (8), **characterised in that** the current contact tube (6; 106) is exposed every time in a portion of the remaining areas, in which the current contact tube (6; 106) with the surface of the electrically conducting material in the intermediate space (8), is fitted with surface-enlarged structures (13) in the form of spiral cooling ribs enclosing the current contact tube (6, 106).

2. A welding torch according to claim 1, **characterised in that** the spacers (11, 12) exhibit a first annular portion (14), resting externally on the current contact tube (6; 106) and enclosing the said, a second annular portion (13) resting on the inner side of the inner tube, and connecting webs (15) connecting in a spoke-like manner both annular portion by leaving intermediate spaces (16).

3. A welding torch according to any of the preceding claims, **characterised in that** the spacers (11, 12) consist globally of an electrically insulating material, in particular an electrically insulating plastic material or such a ceramic.

4. A welding torch according to any of the preceding claims, **characterised in that** thet current contact tube (6; 106) and/or the outer tube (5; 105) are formed of metal.

## Revendications

1. Torche de soudage refroidie par gaz (1; 100) pour une machine de soudage à l'arc comprenant un tube de contact de courant (6; 106) formée à partir d'un matériau électriquement conducteur, à l'intérieur duquel un canal de guidage de fil (7) pour fil de soudage est formé, et un tube de contact de courant (6; 106) est prévu, en laissant un tube extérieur (5; 105) entourant l'espace intermédiaire (8), tandis que l'espace intermédiaire (8) est formé comme conduit de guidage pour gaz de protection et que lesdites entretoises (11, 121) isolant électriquement, lesdits éléments sont disposées entre le tube de contact de courant (6; 106) et le tube extérieur (5; 105), qui présentent des structures de passage (16) pour laisser passer le gaz de protection, tandis que les entretoises (11, 12) sont agencées uniquement dans des zones partielles de l'espace intermédiaire (8), tandis que le tube extérieur est formé d'un matériau électriquement conducteur, en ce que le tube de contact de courant (6; 106) est exposé dans les zones restantes, dans lesquelles aucune entretoise (11, 12) n'est prévue, avec la surface du matériau électriquement conducteur dans l'espace intermédiaire (8),
en ce que le tube externe (5; 105) est exposé dans les zones, dans lesquelles aucune entretoise (11, 12) n'est prévue, avec la surface du matériau électriquement conducteur dans l'espace intermédiaire (8), **caractérisée en ce que** le tube de contact de courant (6; 106) est exposé à chaque fois dans une partie des zones restantes, dans lesquelles le tube de contact de courant (6; 106) avec la surface du matériau électriquement conducteur dans l'espace intermédiaire (8) est pourvu de structures agrandies (13) sous forme de nervures de refroidissement en spirale enfermant le tube de contact de courant (6, 106).

2. Torche de soudage selon la revendication 1, **caractérisée en ce que** les entretoises (11, 12) présentent une première partie annulaire (14), en appui extérieurement sur le tube de contact de courant (6; 106) et entourant celui-ci, une seconde partie annulaire (13) reposant sur le côté intérieur du tube intérieur, et des traverses de connexion (15) reliant d'une manière semblable à des rayons, les deux parties annulaires, en laissant des espaces intermédiaires (16).

3. Torche de soudage selon l'une quelconque des revendications précédentes, **caractérisée en ce que** les entretoises (11, 12) sont constituées globalement d'un matériau électriquement isolant, en particulier une matière plastique électriquement isolante ou une telle céramique.

4. Torche de soudage selon l'une quelconque des revendications précédentes, **caractérisée en ce que** le tube de contact de courant (6; 106) et/ou le tube extérieur (5; 105) sont constitués de métal.
